# EUROPÄISCHE PATENTSCHRIFT

(11) **EP 0 557 759 B1**
(45) Veröffentlichungstag und Bekanntmachung des Hinweises auf die Patenterteilung: **30.08.1995**
(21) Anmeldenummer: 93101781.8
(22) Anmeldetag: 05.02.1993
(51) Int. Cl.: D03D 49/02, B23Q 1/28, F16B 2/14

(54) **Vorrichtung zum einstellbaren Befestigen eines Haltearmes o.dgl. an einem Teil eines Maschinengestells, insbesondere einer Webmaschine**
Device for the adjustable fixing of a supporting arm or the like to a part of a machine, more especially a weaving loom
Dispositif pour le fixage réglable d'un bras-support ou analogue à une partie d'une machine, plus particulièrement un métier à tisser

(30) Priorität: 27.02.1992 BE 9200196
(43) Veröffentlichungstag der Anmeldung: 01.09.1993
(73) Patentinhaber: Picanol N.V., 8900 Ieper (BE)
(72) Erfinder: Lefever, Bart, B-8900 Ieper (BE); Dewachter, Roland, B-8920 Langemark (BE)
(74) Vertreter: Wilhelm & Dauster Patentanwälte European Patent Attorneys

(56) Entgegenhaltungen:
- EP-A- 0 228 990
- DE-A- 3 317 146

## Beschreibung

Die Erfindung betrifft eine Vorrichtung zum einstellbaren Befestigen eines Haltearmes o.dgl. an einem Teil eines Maschinengestells, insbesondere eines eine Umlenkrolle für Kettfäden tragenden Haltearms an einem Seitenteil des Maschinengestells einer Webmaschine, mit einer die Position des Haltearmes einstellenden Stellschraube und mit Mitteln zum Festspannen des Haltearmes an dem Seitenteil in der eingestellten Position.

Bei Webmaschinen ist es bekannt, Maschinenelemente, insbesondere einen Haltearm für den Unterstützungsmechanismus einer Kettfadenumlenkeinrichtung, höhenverstellbar an dem Maschinengestell der Webmaschine anzubringen. Der Haltearm ist mittels Stellschrauben höheneinstellbar gehalten. Er wird durch zusätzliche Befestigungsmittel an dem Maschinengestell gesichert, um während des Webens an dem eingestellten Ort fixiert zu sein. Es ist bekannt, zur Fixierung Verschraubungen vorzusehen, die mit großer Kraft festgezogen werden müssen. Diese mehrere Schrauben enthaltenden Verschraubungen sind somit schwer zu bedienen. Sie sitzen außerdem häufig an nicht gut zugänglichen Stellen.

Der Erfindung liegt die Aufgabe zugrunde, eine Vorrichtung der eingangs genannten Art zu schaffen, die leicht zu bedienen ist.

Diese Aufgabe wird dadurch gelöst, daß zwischem dem Haltearm und dem Teil des Maschinengestells eine Führung mit einer hinterschnittenen Nut und einem Führungsansatz vorgesehen ist, und daß wenigstens ein mittels eines Verstellelementes betätigbares Klemmelement zwischen dem Haltearm und dem Teil des Maschinengestells angeordnet ist, mittels dessen der Führungsansatz gegen eine Fläche der Nut anpreßbar ist.

Eine derartige Vorrichtung ist einfach und schnell zu bedienen, wobei die Verstellschraube und das Verstellelement an gut zugänglichen Stellen angeordnet werden können.

Weitere Merkmale und Vorteile der Erfindung ergeben sich aus der nachfolgenden Beschreibung der in der Zeichnung dargestellten Ausführungsbeispiele. Die Erfindung ist in den Ansprüchen 1-8 beansprucht.
- Fig. 1: zeigt einen Vertikalschnitt durch eine erfindungsgemäße Vorrichtung,

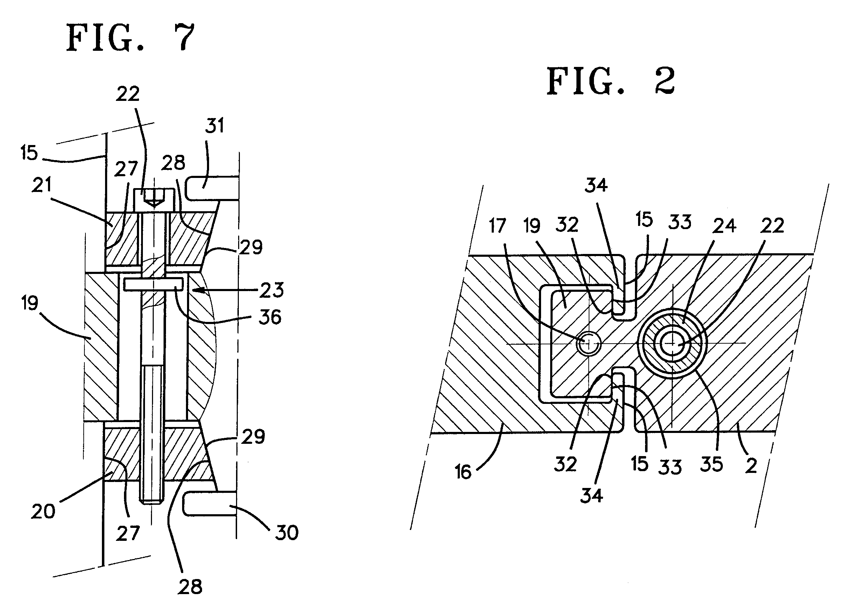

- Fig. 2: einen Schnitt entlang der Linie II-II der Fig. 1,
- Fig. 3 bis 6: einen Ausschnitt F1 der Vorrichtung nach Fig. 1 in unterschiedlichen Stellungen während des Fixierens oder Lösens und
- Fig. 7: einen Schnitt ähnlich Fig. 1 durch eine abgewandelte Ausführungsform.

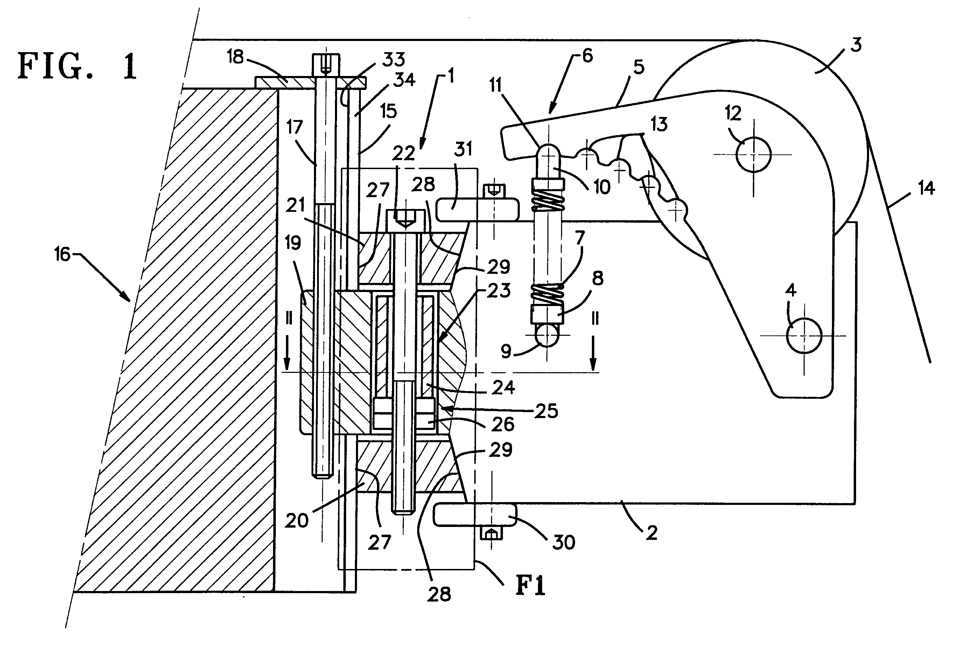

In Fig. 1 ist eine Vorrichtung (1) mit einem Unterstützungsmechanismus für eine Umlenkrolle (3) dargestellt, die eine von einem Kettbaum gelieferte Kettfadenschar (14) unterstützt und umlenkt. Die Umlenkrolle (3) ist mit ihrer Achse (12) auf zwei Schwingen (5) gelagert, die ihrerseits mittels einer Schwenkachse (4) auf Haltearmen (2) gelagert ist. Der freie Arm der beiden Schwingen (5) ist jeweils mittels einer Druckfeder (7) abgestützt, die mittels eines Abstütztelementes (8) um eine Achse (9) verschwenkbar an dem Haltearm (2) gehalten ist. Die Druckfeder (7) ist mit einem Endstück (10) versehen, das in eine Einkerbung (11) des Arms (6) der Schwinge (5) eingreift. Die Druckfeder kann um die Schwenkachse (9) derart verschwenkt werden, daß das Endstück (10) auch in andere Einkerbungen (13) einsetzbar ist.

Die beiden Haltearme (2) sind jeweils an den Stirnenden von Seitenteilen (16) des Maschinengestelles der Webmaschine höhenverstellbar befestigt. Der Bereich des Stirnendes des Seitenteils (16) ist mit einer in vertikaler Richtung verlaufenden, hinterschnittenen Nut versehen, in der ein hammerkopfartig verdickter Führungsansatz (19) des Haltearms (2) geführt ist. Der hammerkopfartige Ansatz (19) liegt mit dem Haltearm (2) zugewandten Führungsflächen (32) an den entsprechenden Gegenflächen (33) der Ränder (34) der hinterschnittenen Nut an. Der hammerkopfartige Ansatz ist mit einem Gewinde versehen, in das eine parallel zur Nut ausgerichtete Stellschraube (17) eingreift, deren Kopf an einer nach oben die Nut begrenzenden Platte (18) abgestützt ist, die an dem Seitenteil (16) befestigt ist. Durch Verdrehen der Stellschrauben (17) kann die Höhenposition der Haltearme (2) und damit die der Umlenkrolle (3) eingestellt werden. Das Gewicht der Haltearme (2) und der Umlenkrolle (3) hängt dabei an den Stellschrauben (17).

Um die Haltearme (2) in der eingestellten Höhenposition fixieren zu können, sind zwei keilförmige Klemmelemente (20, 21) vorgesehen. Die beiden Klemmelemente (20, 21) weisen jeweils eine parallel zu der Stirnfläche (15) des Seitenteils (16) verlaufende Fläche (27) und eine schräge Keilfläche (28) auf. Die gegenläufig schrägen Keilflächen (28) der beiden Klemmelemente (20, 21) liegen Schrägflächen (29) des Haltearms (2) gegenüber.

Die beiden Klemmelemente (20, 21) sind durch eine als Verstellelement dienende Schraube (22) verbunden. Die Schraube (22) ist mit ihrem Gewinde in ein Gewinde des Klemmelementes (20) eingeschraubt. Der Kopf der Schraube (22), die das andere Klemmelement (21) in einer Durchgangsbohrung durchdringt, befindet sich auf der dem Klemmelement (20) abgewandten Seite.

Die Schraube (22) durchdringt den Haltearm (2) in einer Aussparung (35), in welcher ein Mitnehmer (23) für das Klemmelement (21) angeordnet ist. Der Mitnehmer (23) besteht aus einer Hülse (24), die auf einem Abstützelement (25) auszwei Kontermuttern (26) abgestützt ist, die auf die Schraube (22) aufgeschraubt sind. Der Haltearm (2) ist mit Anschlägen (30, 31) versehen, die den möglichen Weg der Klemmelemente (20, 21) begrenzen.

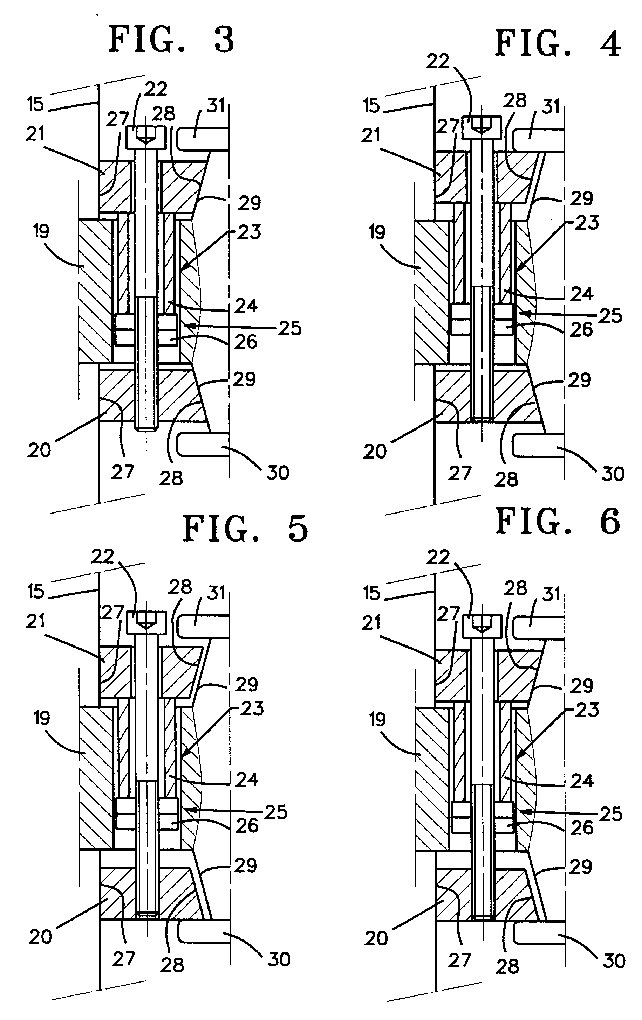

Wie aus Fig. 1 zu ersehen ist, verlaufen die Stellschraube (17) und die als Verstellelement für die Klemmelemente (20, 21) dienende Schraube (22) parallel zueinander, wobei ihre Köpfe beide von oben für entsprechende Werkzeuge zugänglich sind, so daß eine bequeme und gut zugängliche Bedienung möglich ist. In Fig. 1 ist die Vorrichtung in einer Stellung dargestellt, in welcher der Haltearm (2) an dem Seitenteil (16) des Maschinengestells fixiert ist, d.h. die beiden Klemmelemente (20, 21) durch Anziehen der Schraube (22) in die Klemmposition gebracht worden sind. In dieser Position sorgen die Klemmelemente (20, 21) dafür, daß die Flächen (32) des Führungsansatzes (19) des Haltearmes sicher gegen die Gegenflächen (33) angepreßt sind. Soll die Position der Haltearm (2) in der Höhe verändert werden, so sind zunächst die Verstellelemente, d.h. die Schrauben (22), zu lockern. Dieses Lockern führt zu der in Fig. 3 dargestellten Position der Klemmelemente, wobei der Mitnehmer (23) so weit gewandert ist, daß er an dem Klemmelement (21) anliegt, d.h. der freie Rand der Hülse (24) liegt an dem Klemmelement (21) an. Wird die Schraube (22) weiter in Richtung "lockern" gedreht, so wird das Klemmelement (21) mitgenommen (Fig. 4). Sobald das Klemmelement (21) gegen den Anschlag (31) anläuft, führt jede weitere Verdrehung der Schraube (22) zum Lösen des Klemmelementes. Falls sich das Klemmelement (20) zuerst lösen sollte, so läuft dieses gegen den Anschlag (30) an (Fig. 6). Ein weiteres Verdrehen der Schraube (22) führt dann zu einem Lösen des gegenüberliegenden Klemmelementes (21), so daß in beiden Fällen die Position erhalten wird, in der beide Klemmelemente (20, 21) sich mit ihren Keilflächen (28) von den gegenüberliegenden Flächen (29) der Haltearm (2) gelöst haben (Fig. 5). In dieser Position können dann die Haltearme durch Verdrehen der Stellschrauben (17) in ihrer Höhenposition verändert werden. Anschließend erfolgt dann ein Fixieren der Höhenposition durch Festziehen der als Verstellelement für die Klemmelemente (20, 21) dienenden Schraube (22).

In Fig. 7 ist eine Variante dargestellt, welche eine vereinfachte Form eines Mitnehmers (23) für das Klemmelement (21) aufweist. Der Mitnehmer (23) besteht aus einem Querstift (36), der in eine Querbohrung der Schraube (22) eingesetzt ist.

Bei einer abgewandelten Vorrichtung wird vorgesehen, daß die Schraube (22) mit zwei gegenläufigen Gewindeabschnitten versehen ist, die jeweils einem der Klemmelemente (20, 21) zugeordnet sind.

Der Vorteil der vorliegenden Erfindung besteht darin, daß die Stellschraube (17) und das Verstellelement (Schraube 22) von nahezu der gleichen Stelle aus zugänglich sind und somit eine einfache und bequeme Bedienung ermöglichen.

In Abwandlung der dargestellten Ausführungsform sind auch andere Klemmelemente einsetzbar, insbesondere Klemmelemente die nicht durch ein axiales Gegeneinanderverschieben in die gelöste oder die geklemmte Position gebracht werden, sondern durch ein Verdrehen. Beispielsweise ist es möglich, zu diesem Zweck in dem Führungsansatz (19) eine parallel zur Stellschraube (17) angeordnete Exzenterwalze anzuordnen, die dann ebenfalls über ein parallel zur Stellschraube (17) verlaufendes Verstellelement betätigbar ist.

## Patentansprüche

1. Vorrichtung zum einstellbaren Befestigen eines Haltearms (2) an einem Teil (16) eines Maschinengestells, insbesondere eines eine Umlenkrolle (3) für Kettfäden (14) tragenden Haltearms (2) an einem Seitenteil (16) des Maschinengestells einer Webmaschine, mit einer die Position des Haltearms einstellenden Stellschraube (17) und mit Mitteln zum Festspannen des Haltearms an dem Seitenteil in der eingestellten Position, dadurch gekennzeichnet, daß zwischem dem Haltearm und dem Teil (16) des Maschinengestells eine Führung mit einer hinterschnittenen Nut und einem Führungsansatz (19) vorgesehen ist, und daß wenigstens ein mittels eines Verstellelementes (22) betätigbares Klemmelement (20, 21) zwischen dem Haltearm (2) und dem Teil (16) des Maschinengestells angeordnet ist, mittels dessen der Führungsansatz gegen eine Fläche der Nut anpreßbar ist.

2. Vorrichtung nach Anspruch 1, dadurch gekennzeichnet, daß das Verstellelement (22) des Klemmelementes (20, 21) parallel zu der Stellschraube (17) angeordnet ist.

3. Vorrichtung nach Anspruch 1 oder 2, dadurch gekennzeichnet, daß wenigstens ein keilförmiges Klemmelement (20, 21) vorgesehen ist, das mittels des Verstellelementes (22) in Verstellrichtung des Haltearms (2) verschiebbar ist.

4. Vorrichtung nach Anspruch 3, dadurch gekennzeichnet, daß das keilförmige Klemmelement (20, 21) zwischen einer Stirnfläche (15) des Teils (16) des Maschinengestells und dem Haltearm (2) angeordnet ist und eine parallel zu der Stirnfläche verlaufende Fläche (27) und eine einer Schrägfläche (29) des Haltearms gegenüberliegende Keilfläche (28) aufweist.

5. Vorrichtung nach einem der Ansprüche 1 bis 4, dadurch gekennzeichnet, daß zwei einander gegenüberliegende und mittels des Verstellelementes (22) gegensinnig verschiebbare keilförmige Klemmelemente (20, 21) vorgesehen sind.

6. Vorrichtung nach einem der Ansprüche 1 bis 5, dadurch gekennzeichnet, daß der Haltearm (2) mit Anschlägen (30, 31) versehen ist, die den Weg begrenzen, um welchen die Klemmelemente (20, 21) auseinander bewegbar sind.

7. Vorrichtung nach einem der Ansprüche 1 bis 6, dadurch gekennzeichnet, daß als Verstellelement eine Schraube (22) vorgesehen ist, mittels der die beiden Klemmelemente (20, 21) gegeneinander verspannbar sind.

8. Vorrichtung nach Anspruch 7, dadurch gekennzeichnet, daß die Schraube (22) in ein Gewinde eines (20) der Klemmelemente eingeschraubt ist und mit einem fest an ihr angebrachten Mitnehmer (23) versehen ist, der dem anderen Klemmelement (21) zugeordnet ist.

## Claims

1. A device to attach a supporting arm (2) to a part (16) of a machine frame in such a way that it can be adjusted, in particular a supporting arm (2) bearing a deflection roller (3) for warp threads (14) to a side part (16) of the machine frame of a weaving machine, with an adjusting screw (17) to adjust the position of the supporting arm and with means to tighten the supporting arm against the side part in the position set, characterised in that between the supporting arm and the part (16) of the machine frame is provided a guide with an undercut groove and a guide projection (19), and that at least one clamping element which can be actuated by means of an adjusting element (22) is located between the supporting arm (2) and the part (16) of the machine frame by means of which the guide projection can be clamped against a surface of the groove.

2. A device in accordance with Claim 2, characterised in that the adjusting element (22) on the clamping element (20, 21) is located parallel to the adjusting screw (17).

3. A device in accordance with Claim 1 or 2, characterised in that at least one wedge-shaped clamping element (20, 21) is provided which can be moved by means of the adjusting element (22) in the direction in which the supporting arm (2) is adjusted.

4. A device in accordance with Claim 3, characterised in that the wedge-shaped clamping element (20, 21) is located between the front face (15) of the part (16) of the machine frame and the supporting arm (2) and has one surface (27) which runs parallel to the front face and one wedge surface (28) which sits opposite a slanting edge (29) of the supporting arm.

5. A device in accordance with one of Claims 1 to 4, characterised in that two opposing, wedge-shaped clamping elements (20, 21) which can be moved in opposite directions by means of the adjusting element (22) are provided.

6. A device in accordance with one of Claims 1 to 5, characterised in that the supporting arm (2) is provided with stops (30, 31) which limit the path along which the clamping elements (20, 21) can be moved apart.

7. A device in accordance with one of Claims 1 to 6, characterised in that a screw (22) is provided as an adjusting element by means of which the two clamping elements (20, 21) can be braced against each other.

8. A device in accordance with Claim 7, characterised in that the screw (22) is screwed into a thread in one (20) of the clamping elements and is provided with a carrier (23) securely affixed to it for the other clamping element (21).

## Revendications

1. Dispositif pour la fixation réglable d'un bras support (2) contre une partie (16) d'un bâti de machine, en particulier d'un bras support (2), portant un galet de renvoi (3) destiné à des fils de chaîne (14), contre la partie latérale (16) du bâti d'une machine à tisser, avec une vis d'arrêt (17), qui ajuste la position du bras support, et avec des organes destinés à bloquer le bras support contre la partie latérale dans la position ajustée, caractérisé en ce qu'on prévoit entre le bras support et la partie (16) du bâti de machine un guidage comportant une rainure en contre-dépouille et un épaulement de guidage (19), et qu'au moins un élément de serrage (20, 21), pouvant être manoeuvré à l'aide d'un élément de réglage (22), est disposé entre le bras support (2) et la partie (16) du bâti de machine, élément à l'aide duquel l'épaulement de guidage peut être appuyé contre une surface de la rainure.

2. Dispositif selon la revendication 1, caractérisé en ce que l'élément de réglage (22) de l'élément de serrage (20, 21) est disposé parallèlement à la vis d'arrêt (17).

3. Dispositif selon la revendication 1 ou 2, caractérisé en ce qu'on prévoit au moins un élément de serrage (20, 21) en forme de coin, et qui, à l'aide de l'élément de réglage (22), peut coulisser dans la direction de réglage du bras support (2).

4. Dispositif selon la revendication 3, caractérisé en ce que l'élément de serrage en forme de coin (20, 21) est disposé entre une surface frontale (15) de la partie (16) du bâti de machine et le bras support (2), et comporte une surface (27), parallèle à la surface frontale, et une surface de coin (28) opposée à une surface inclinée (29) du bras support.

5. Dispositif selon l'une des revendications 1 à 4, caractérisé en ce qu'on prévoit deux éléments de serrage en forme de coin (20, 21), opposés l'un à l'autre et pouvant coulisser en sens contraire à l'aide de l'élément de réglage (22).

6. Dispositif selon l'une des revendications 1 à 5, caractérisé en ce que le bras support (2) est pourvu de butées (30, 31) qui délimitent le trajet sur lequel les éléments de serrage (20, 21) peuvent s'éloigner l'un de l'autre.

7. Dispositif selon l'une des revendications 1 à 6, caractérisé en ce qu'on prévoit comme élément de serrage une vis (22) à l'aide de laquelle les deux éléments de serrage (20, 21) peuvent être serrés l'un contre l'autre.

8. Dispositif selon la revendication 7, caractérisé en ce que la vis (22) est insérée dans un filetage de l'un (20) des éléments de serrage, et est pourvue d'un ergot d'entraînement (23), qui lui est rapporté à demeure, et auquel est affecté l'autre élément de serrage (21).
